# EUROPEAN PATENT SPECIFICATION

(11) **EP 0 866 450 B1**
(45) Date of publication and mention of the grant of the patent: **30.06.1999**
(21) Application number: 97830121.6
(22) Date of filing: 17.03.1997
(51) Int. Cl.: G11B 7/26, B29D 17/00

(54) **Device and process for gluing disc halves for manufacturing data-storage optical discs**
Gerät und Verfahren zum Kleben von Plattenhälften zur Herstellung von optischen Datenspeicherplatten
Appareil et procédé de collage moitiés de disques pour la fabrication de disques optiques de stockage de données

(43) Date of publication of application: 23.09.1998
(73) Proprietor: TAPEMATIC S.p.A., I-20052 Monza (Milano) (IT)
(72) Inventor: Perego, Luciano, 20050 Mezzago (Milano) (IT)
(74) Representative: Righetti, Giuseppe

(56) References cited:
- EP-A- 0 744 739
- PATENT ABSTRACTS OF JAPAN vol. 015, no. 095 (P-1176), 7 March 1991 & JP 02 308444 A (SEIKO EPSON CORP), 21 December 1990,
- PATENT ABSTRACTS OF JAPAN vol. 097, no. 003, 31 March 1997 & JP 08 293131 A (KITANO ENG KK), 5 November 1996,

## Description

The present invention relates to a device for gluing disc halves together, for manufacturing data-storage optical discs, said device being of the type comprising: a main support arranged to receive a first disc half thereon, which has a surface intended for gluing turned upwardly in an opposite direction to the main support; an auxiliary support movable relative to the main support between a standby position in which it is moved away from the main support to receive a second disc half in engagement and a work position at which it operates on said main support to pair the second disc half with the first disc half, adhesive-dispensing means for distributing an adhesive or glue between the first and second disc halves. Such a device is known from JP-A-08-293131.

The invention also relates to a new process for gluing disc halves together put into practice by the device in reference.

It is known that data-storage optical discs, of the type commercially available under the abbreviation "DVD" ("Digital Video Disc") consist, as regards their structure, of two disc halves each of a 0.6 mm thickness, glued together.

Presently there are different types of "DVD" and, depending on their storage capacity, they are differentiated by abbreviations "DVD5", "DVD9", "DVD10". "DVD5" consists of a first disc half on which data read by an appropriate laser head are recorded and of a second stiffening disc half.

Unlike the preceding one, "DVD10" is made starting from two disc halves both containing data. Data in this second optical disc are read by two heads, one located close to one disc face, the other located at the opposite face.

"DVD9" too is made starting from two data-containing disc halves but, unlike the preceding one, data reading takes place by means of two laser heads placed at one and the same surface of the optical disc.

Nowadays there are different processes used for carrying out gluing in order to make finished discs. According to one of this, an adhesive is spread over the surfaces of the two disc halves to be brought into contact with each other by means of rollers.

In more detail, the disc halves are caused to pass under the rollers on which an adhesive has been previously distributed so that an even amount of same will be spread over the whole surface to be glued.

Subsequently, the two disc halves thus obtained are removed and their glue-wet surfaces are brought into mutual contact so as to obtain a single disc. This disc is then sent to a press where evenness of the spread glue is improved and an efficient gluing is ensured.

The disc is afterwards brought to a drying station, generally operating by means of an UV-ray lamp, for drying the glue.

It is to point out that accomplishment of the process herein briefly described is rather complicated when it is incorporated in an automatic production cycle. Actually, if the two disc halves are wished to be simultaneously ready for being joined together, i.e. with glue spread thereon at the same instant, two stations provided with rollers are required. From an economical point of view this involves an increase in costs for purchase and maintenance of two identical stations and, from the point of view of the device bulkiness, an important increase in the required spaces for housing the device is needed. On the other hand, the use of a single inlet station for the rollers doubles time for the gluing step.

In order to overcome the above drawbacks in the automatic production cycle, a different gluing process is also known, in which the two disc halves are moved close upon each other and engaged by suction cups or similar means that carry out elastic deformation of same keeping their central areas in mutual contact and their outer peripheral edges mutually separated from each other. While the disc halves are so arranged, a nozzle being part of a glue-dispensing device is inserted in the gap created between them.

During this step the device causes rotation of the two disc halves making them perform at least one complete turn during which glue is released at the central areas of the disc halves.

The nozzle is then drawn out and the two disc halves are released by the suction cups or like means, so that the disc halves resume a flat conformation giving rise to glue distribution by capillarity over the whole surface of mutual contact. Optionally it is possible to rotate the two paired disc halves so that the centrifugal force may enable a complete glue spreading.

While this type of technique overcomes some of the inconveniences of the preceding technique, it has some drawbacks too.

Above all, in carrying out gluing by this process, the fact that a certain amount of the distributed glue may escape from the outer peripheral edges of the two disc halves creates some problems.

As a first consequence of the above, introduction of a further work station into the optical-disc production cycle becomes necessary in order to eliminate the dried glue present outwardly of the whole perimetric edge of the finished disc, for example by a grinding operation.

A further drawback is due to the fact that the amount of glue interposed between the two disc halves has an uncheckable volume.

For a correct gluing, the use of a glue amount corresponding to about 0.5 ml is provided, so as to obtain a nominal thickness of about 50 microns. It is obvious that, if part of the glue escapes from the discs, achievement of a precise glue amount and thickness when such small values are concerned becomes practically impossible.

The main object of the present invention is substantially to solve the problems of the known art.

The foregoing and further objects that will become more apparent in the course of the following description are substantially achieved by a device for gluing disc halves according to claim 1.

In accordance with the present invention, said device puts into practice a process for gluing disc halves together in the manufacture of data-storage optical discs comprising the following steps: arranging a first disc half so that one of its surfaces intended for gluing is turned upwardly; resiliently deforming the first disc half while keeping it with its outer circumferential edge raised relative to a central portion thereof; spreading an adhesive at least on the outer circumferential edge of the first disc half, letting the adhesive run down by gravity along the surface intended for gluing; pairing the first disc half with a second disc half bringing one face of the second disc half into contact with the surface intended for gluing of the first disc half.

Further features and advantages will best be understood from the detailed description of a preferred embodiment of a device for gluing disc halves, for manufacturing data-storage optical discs in accordance with the present invention. This description is taken hereinafter with reference to the accompanying drawings, given by way of non-limiting example, in which:
- Fig. 1 is an elevational view partly in section of a device in accordance with the invention;
- Fig. 2 is an alternative embodiment of the device shown in Fig. 1;
- Fig. 3 is a further embodiment of the device in Fig. 1;
- Fig. 4 diagrammatically shows the structure and operating principle of an optical disc of the "DVD5" type;
- Fig. 5 diagrammatically shows the structure and operating principle of an optical disc of the "DVD10" type;
- Fig. 6 diagrammatically shows the structure and operating principle of an optical disc of the "DVD9" type.

With reference to the drawings, a device for gluing disc halves, for manufacturing data-storage optical discs in accordance with the present invention has been generally identified by reference numeral 1.

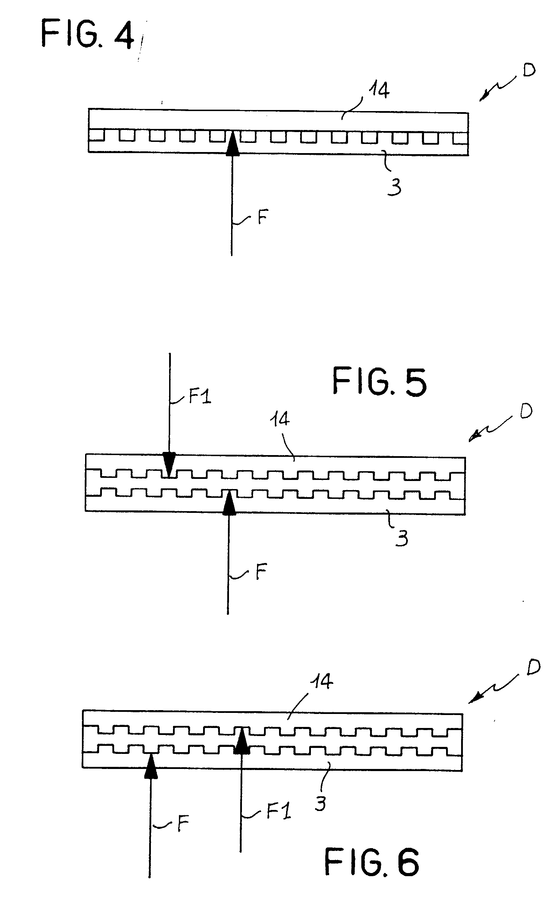

For the sake of clarity, it is pointed out that Figs. 4, 5 and 6 show three different typologies of a "DVD" disc that can be obtained by the process of the device in question.

In more detail, shown in Fig. 4 is an optical disc D of the "DVD5" type, comprising a first disc half 3 carrying the recorded data and a second disc half 14 applied to the first disc half 3 for protection of the recorded data. Said recorded data can be read by a laser head, represented by way of example by arrow F and operating on the side of the first disc half 3.

Shown in Fig. 5 is an optical disc of the "DVD10" type, essentially consisting of two disc halves 3, 14 both carrying recorded data. The recorded data on either disc half 3, 14 can be read by respective playback heads F and F1 disposed on opposite sides respectively relative to disc D.

Shown in Fig. 6 is an optical disc of the "DVD9" type, also consisting of two disc halves 3, 14 both carrying recorded data. The recorded data can be read by two respective playback heads F, F1 both disposed on the same side of disc D, as diagrammatically shown in Fig. 6.

The device 1 comprises a main support 2 arranged to receive and bear thereon a first disc half 3 which has a surface intended for gluing 3a turned upwardly, in the opposite direction to the main support 2.

Operating in the main support is elastic-deformation means 4 the task of which is to dispose the first disc half 3 at a resiliently deformed condition in which the first disc half has an outer circumferential edge 3b thereof raised relative to its central portion 3c, as clearly shown in the accompanying figures.

To this end, the elastic-deformation means 4 may comprise a rest portion 5 formed on a side wall 6 of the main support 2 and such shaped as to act on the outer circumferential edge 3b of the first disc half 3, interacting with holding means 7, 8, 9 operating on the first disc half to lower the central position 3c thereof so as to bring it to the deformed condition starting from a rest condition in which it is substantially planar.

The holding means 7, 8, 9 can optionally be of a mechanical type but, in a preferential solution, it essentially comprises one or more suction ducts 7 connected to a vacuum pump (not shown as known) and opening, through the main support 2, into a vacuum chamber 8 defined between the main support and a lower surface 3d of the first disc half 3 the perimetric edge 3b of which is located on the rest portion 5. The sucking action produced by the suction ducts 7 and the consequent vacuum created in chamber 8 causes elastic deformation of the first disc half 3 that will substantially take the form of an inverted cone.

Alternatively, the elastic deformation of the first disc half 3 from the rest condition to the resiliently deformed condition can be achieved by an axial thrust action carried out on said disc half, through a handling device not shown as feasible in a manner known per se and intended for automatic loading of the disc half 3 onto the main support 2. During this loading step, a correct centering of the first disc half 3 may be promoted by arranging, at the end of the side wall 6 and next to the rest portion 5, at least one perimetric centering projection 6a the shape of which matches that of the disc half itself.

One or more suction cups 9 associated at their ends with the suction ducts 7 operate close to the lower surface 3d of the first disc half 3 to conveniently hold it to the deformed condition.

It is also provided that, on reaching of the elastic-deformation condition, the first disc half 3 should have its central portion 3c in contact with one or more inner rest elements that can be embodied by said suction cups 9, for example. In addition to, or in place of the suction cups 9, the inner rest elements may comprise mechanical abutment shoulders, for instance formed on a base wall 2a or a central hub 10 carried by the main support 2 for fitting of a central hole usually provided in the first disc half 3.

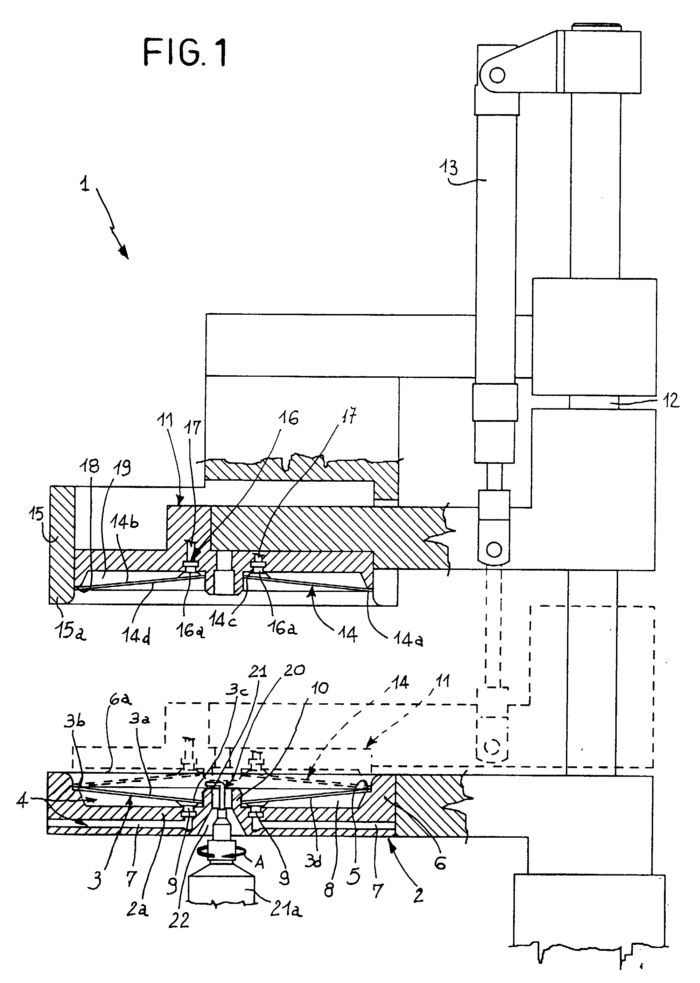

The device 1 further comprises an auxiliary support 11 preferably mounted on a guide structure 12 integral with the main support 2, at an opposite position relative to said main support. Upon the action of a fluid-operated actuator 13 or equivalent means, the auxiliary support 11 is movable relative to the main support 2 between a standby position, in which it is moved away from the main support, as shown by solid line, to receive a second disc half 14 in engagement, and a work position in which, as shown by chain line in Fig. 1, it acts on the main support 2 to pair the second disc half 14 with the first disc half 3, as better clarified in the following. In the work position, the auxiliary support 11 is advantageously in engagement with the perimetric projection 6a of the main support 2, so as to ensure a perfect centering of the second disc half 14 relative to the first disc half 3.

Positioning of the second disc half 14 under the auxiliary support 11 can be carried out for example by a mechanical handling device known per se and therefore not further described or shown. In order to promote centering of the second disc half 14 during engagement with the auxiliary support 11, use of an outer jacket 15 is provided which is rigidly fixed relative to the guide structure 12.

When the auxiliary support 11 is at the standby position, the outer jacket 15 surrounds it slightly projecting from a lower edge thereof, so as to define at least one auxiliary projection 15a the shape of which matches that of the second disc half 14 and which is substantially similar to the perimetric projection 6a defined by the side wall 6 of the main support 2.

When the auxiliary support 11 is moved away from the standby position, it is released from the outer jacket 15 so that, on reaching of the work position, the auxiliary support 11 can be axially fitted in the perimetric projection 6a of the main support 2 thereby bringing the outer circumferential edge 14a of the second disc half 14 in abutment on the outer circumferential edge 3b of the first disc half 3.

Also associated with the auxiliary support 11 is auxiliary holding means 16 the task of which is substantially that of holding the second disc half 14, once the latter has been released under the auxiliary support by the above mentioned mechanical handling device.

The auxiliary holding means 16 may be of the mechanical type or, as provided in the described embodiment, may involve the use of one or more auxiliary suction cups 16a to be actuated through respective suction ducts 17 connected with a suction pump not shown as known.

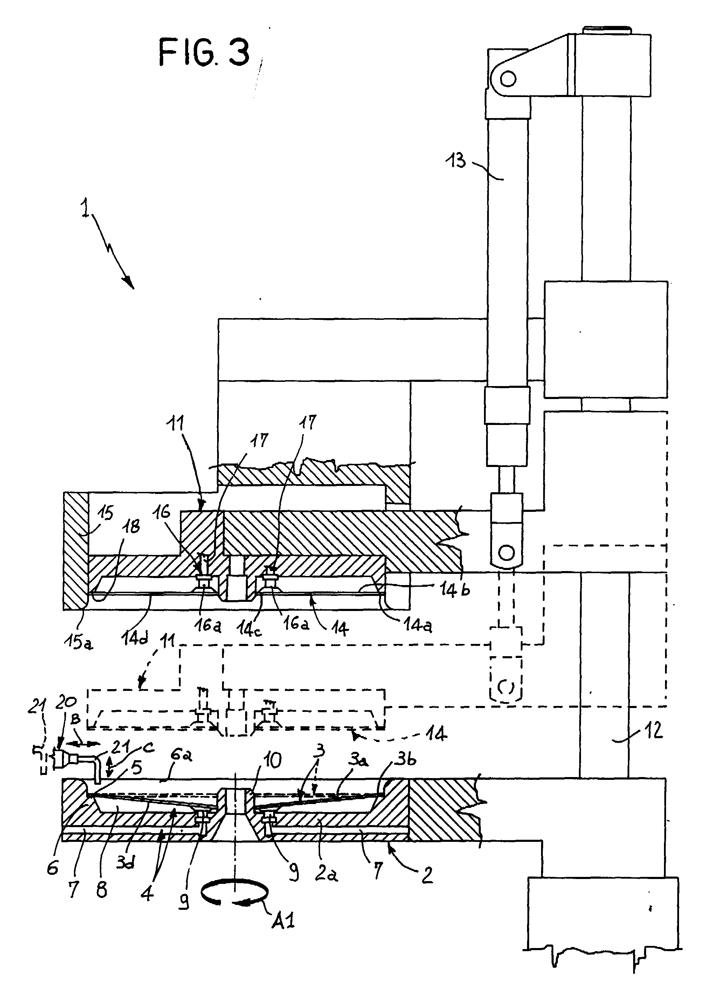

In the embodiment in Fig. 3 the auxiliary suction cups 16a hold the second disc half 14, keeping it in a rest condition, that is in a substantially planar configuration, its circumferential edge 14a abutting against an auxiliary rest portion 18 provided on the auxiliary support 11.

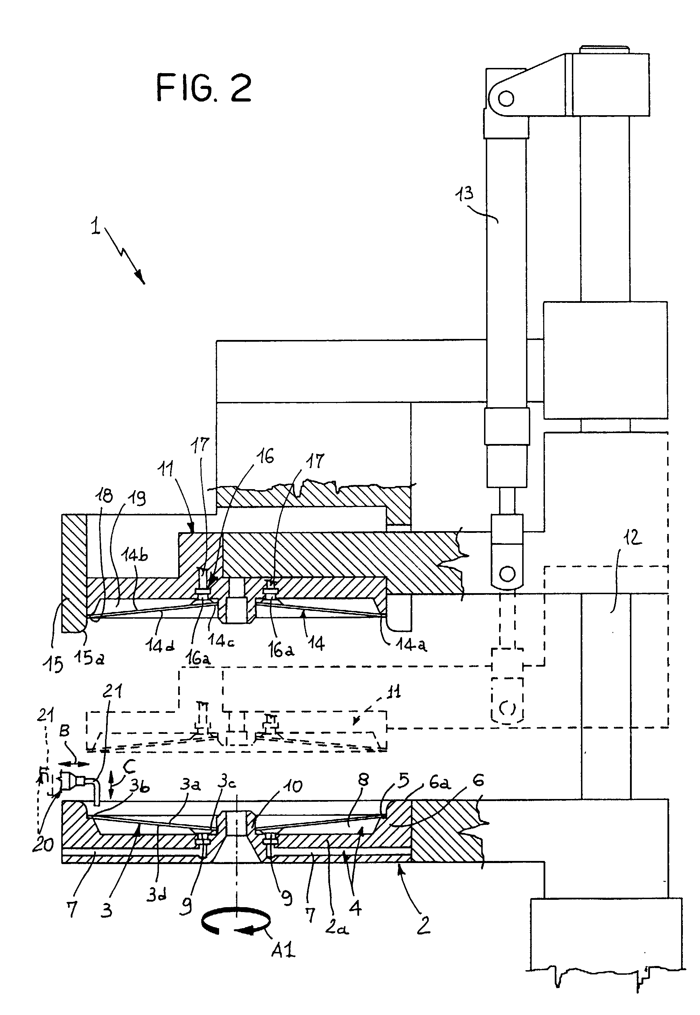

In the embodiments shown in Figs. 1 and 2, the auxiliary suction cups 16a, on the contrary, take a slightly raised position relative to the lying plane of the auxiliary rest portion 18, so that, together with said rest portion 18, they constitute auxiliary deformation means similar in structure and operation to the elastic-deformation means described with reference to the main support 2. Actually, in the embodiments in Figs. 1 and 2 the suction ducts 17 open, through the respective auxiliary suction cups 16a, into an auxiliary vacuum chamber 19 defined between the auxiliary support 11 and an upper surface 14b of the second disc half 14.

The vacuum produced in the auxiliary chamber 19 causes deformation of the second disc half 14 from the rest condition to a respective elastic-deformation condition, in which the second disc half takes a substantially conical configuration, one central portion thereof being raised relative to its outer circumferential edge 14a. On reaching of the resiliently deformed condition, the central portion 14c of the second disc half 14 is brought into abutment relation with one or more auxiliary inner rest elements that may, for example, consist of the same auxiliary suction cups 16a. In any case, the auxiliary suction cups 16a also perform the function of holding the second disc half 14 in the resiliently deformed condition.

The device 1 also comprises adhesive-dispensing means generally denoted by 20, adapted to distribute an adhesive or glue between the first and second disc halves 3, 14 so as to enable stable pairing of same.

In accordance with a first preferential solution, shown in Fig. 1, the dispensing means 20 essentially comprises a delivery nozzle 21 operating at the central portion of the first disc half 3, in the direction of the perimetric edge 3b of the latter. Actuating means 21a, consisting of an electric motor for example, drives nozzle 21 in rotation about the first disc half 3 axis, as shown by arrow A, to evenly spread the adhesive along the outer circumferential edge 3b of the first disc half.

In particular, nozzle 21 preferably operates through a through opening 22 concentrically formed through the base wall 2a of the main support 2. However, the delivery nozzle 21 and respective actuating means 21a may be in engagement with the auxiliary support 11 as well, in the same manner as above described.

In a second preferential embodiment, said electric motor or equivalent actuating means 21a (not shown) can drive the main support 2 in rotation about its own axis, coincident with the geometric axis of the first disc half 3, as shown by arrow A1 in Figs. 2 and 3. The delivery nozzle 21 is movable, as shown by arrow B, between a rest position, in which it is moved away from the main support 2 and the first disc half 3, beyond the radial overall dimensions of same, and an operating position in which it operates close to the outer circumferential edge 3b of the first disc half 3 to evenly distribute the adhesive while the support 2, and as a result the disc half, are being driven in rotation.

For an even distribution of the adhesive, at least one complete turn of the first disc half 3 is required. As shown by arrow C in Figs. 2 and 3, nozzle 21 can be given a movement in a vertical direction to cause the end of said nozzle to be brought close to the perimetric edge 3b stepping over the perimetric projection 6a without interfering therewith.

In both solutions for accomplishment of the means 20, the dispensed adhesive delivered along the circumferential edge 3b of the first disc half 3 preferably has a low viscosity, comparable to that of water. Consequently, due to the inverted-cone configuration taken by the first disc half 3 disposed in the resiliently deformed condition, the adhesive distributed in a given amount along the outer circumferential edge 3b is prone to glide by gravity, thereby being evenly distributed over the whole surface 3a intended for gluing. If required, in the solution shown in Figs. 2 and 3, the delivery nozzle 21 can be actuated above the first disc half 3 even in the direction of the geometric axis of the latter, to facilitate an even glue spreading.

The operating cycle of the device in reference is now described in connection with each of the embodiments shown in Figs. 1, 2 and 3, respectively.

With reference to Fig. 1, the first disc 3 is arranged on the main support 2 in such a manner that its surface intended for gluing 3a is turned upwardly. The suction action produced in the vacuum chamber 8 causes the elastic deformation of the first disc half 3 from the rest condition corresponding to a substantially planar configuration, to the resiliently deformed condition, in which the central portion 3c of the disc half is engaged by the suction cups 9.

Concurrently with arrangement of the first disc half 3 on the main support 2, also engagement of the second disc half 14 under the auxiliary support 11 is carried out.

By effect of the vacuum produced in the auxiliary vacuum chamber 19, the second disc half 14 is brought to the respective elastic-deformation condition in which it takes a substantially conical configuration, in mirror image relationship with the first disc half 3.

The auxiliary support 11 is lowered onto the main support 2 so that the outer circumferential edge 14a of the second disc half 14 is brought into contact with the outer circumferential edge 3b of the first disc half 3, as shown in chain line in Fig. 1.

At this point the delivery nozzle 21 is operated and it delivers glue at least at the outer circumferential edge 3b of the first disc half 3. Simultaneously with glue delivery, nozzle 21 is set in rotation by the actuating means 21a so that the glue is distributed along the whole extension of the circumferential edge of the disc half 3. Since the circumferential edge 3b of the first disc half 3 is in contact with the circumferential edge 14a of the second disc half 14, any risks of glue escaping from the perimetric edges of the disc halves is advantageously eliminated. As previously described, the delivered glue on the periphery of the disc half 3 immediately runs down by gravity towards the central portion 3a of the disc half itself, and evenly spreads over the whole surface to be glued 3a.

At this point, the first and second disc halves 3, 14 are released simultaneously or after each other from the elastic-deformation condition by deactivation of the sucking effect produced through the respective suction ducts 7, 17.

Then the disc halves 3, 14 resiliently resume their respective rest conditions and consequently pair with each other, since the lower surface 14d of the second disc half 14 comes into contact with the gluing surface 3a of the first disc half 3 which is coated with glue.

The optical disc thus obtained can be removed from the device 1 after moving the auxiliary support 11 away from the main support 2.

Referring to Fig. 2, the operating cycle of the embodiment therein shown involves engagement of the first and second disc halves 3, 14 on the main support 2 and auxiliary support 11 respectively, in the same manner as above described with reference to Fig. 1. Before the perimetric edges 3b, 14a of the disc halves 3, 14 are brought into mutual contact following movement of the auxiliary support 11 close to the main support 2, the step involving spreading of glue on the first disc half 3 is carried out. To this end, the delivery nozzle 21 is put to the operating position, close to the outer circumferential edge 3b of the first disc half 3. The main support 2 is then set in rotation in the direction of arrow A1 together with the first disc half 3, while the delivery nozzle 21 is delivering glue which is therefore spread on the whole extension of the outer circumferential edge 3b of said disc half. Nozzle 21 is then moved from the operating position to the rest position, to enable the second disc half 14 to move close to the first disc half 3.

Once the two disc halves 3, 14 have come into mutual contact relationship at the respective perimetric edges, they are released from the elastic-deformation condition to be definitively paired together in the same manner as described with reference to Fig. 1.

With reference to Fig. 3, arrangement of the first disc half 3 on the main support 2 and elastic deformation thereof take place in the same manner as previously described. The second disc half 14 is put on the auxiliary support 11 and held thereon by the holding means 16 keeping a planar configuration.

Upon the action of the dispensing means 20, glue spreading takes place on the first disc half 3 in the same manner as described with reference to Fig. 2.

When glue delivered to the outer circumferential edge 3b has been evenly distributed on the gluing surface 3a, the disc half 3 is released from the deformed condition to a rest condition, taking a planar configuration again, and after displacement of the delivery nozzle 21 to the rest position, the auxiliary support 11 is lowered onto the main support 2. As a result, the disc halves 3, 14, both disposed in a rest condition and having therefore a planar configuration, pair with each other by direct mutual contact of the whole surface extension of their opposite surfaces 3a, 14d.

The operating cycle relative to the proposed solutions terminates with an optional pressing of the two disc halves 3, 14 followed by a drying step applied to the glue interposed between the two disc halves.

The present invention achieves the intended purposes.

Actually, the device in question appears to be capable of carrying out pairing of the disc halves in an optimal manner, by ensuring an even glue distribution on the surfaces of mutual contact and eliminating any risks of glue escape from the outer perimetric edge of the obtained disc. Thus, any additional cleaning and/or grinding operation is no longer required for eliminating the excess glue from the outer perimetric edges of the discs.

It is also to point out that the device in question is very simple in terms of accomplishment and operation, to advantage of the manufacturing and servicing costs of same.

Due to its compact structure, the device in question can be easily installed on usual machines for automatic production of optical discs.

In addition, the great flexibility of use of the device in question is to be emphasized, as it can be effectively employed for making different typologies of optical discs of the type currently called "DVD".

## Claims

1. A device for gluing disc halves together in the manufacture of data-storage optical discs, comprising:
- a main support (2) arranged to receive a first disc half (3) thereon, which has a surface intended for gluing (3a) turned upwardly in an opposite direction to the main support (2);
- an auxiliary support (11) movable relative to the main support (2) between a standby position in which it is moved away from the main support (2) to receive a second disc half (14) in engagement, and a work position at which it operates on said main support (2) to pair the second disc half (14) with the first disc half (3),
- adhesive-dispensing means (20) for distributing an adhesive or glue between the first and second disc halves,
characterized in that it further comprises:
- elastic-deformation means (4) associated with the main support (2) and operating on the first disc half (3) to dispose it in a deformed condition in which said first disc half (3) has its outer circumferential edge (3b) raised relative to its central portion (3c), said adhesive-dispensing means (20) distributing glue at least close to the outer circumferential edge(3b) of said first disc half (3) in its deformed condition, letting the glue run down by gravity along the surface intended for gluing (3a).

2. A gluing device according to claim 1, characterized in that the elastic-deformation means (4) comprises a rest portion (5) located on a side wall (6) of the main support (2) and acting at the outer circumferential edge (3b) of the first disc half (3), and holding means (5, 7, 8, 9) operating on said first disc half (3) to bring the latter to said deformed condition starting from a rest condition in which it is substantially planar.

3. A gluing device according to claim 2, characterized in that said holding means (5, 7, 8, 9) comprises at least one suction duct (7) opening into a vacuum chamber (8) defined between the main support (2) and a lower surface (3d) of the first disc half (3) the perimetric edge (3b) of which is disposed on said rest portion (5).

4. A gluing device according to claim 2, characterized in that the holding means (5, 7, 8, 9) comprises a given number of suction cups (9) operating at a lower surface (3d) of the first disc half (3) to hold it in the deformed condition.

5. A gluing device according to claim 2, characterized in that the holding means (5, 7, 8, 9) further comprises at least one inner rest element (9) on which the central portion (3c) of the first disc half (3) leans when the latter is in the deformed condition.

6. A gluing device according to claim 1, characterized in that the dispensing means (20) comprises:
- a delivery nozzle (21) placed close to the central portion (3c) of the first disc half (3) to deliver the adhesive or glue to the outer edge (3b) of said first disc half (3);
- actuating means (21a) to drive said nozzle (21) in rotation about the axis of said first disc half (3) to distribute glue on the outer circumferential edge (3b) of said first disc half (3).

7. A gluing device according to claim 1, characterized in that the dispensing means (20) comprises:
- actuating means (21a) operating on the main support (2) to drive in rotation the first disc half (3) about its own axis;
- a delivery nozzle (21) movable between a rest position spaced away from the main support (2) and an operating position in which it operates close to the outer circumferential edge (3b) of the first disc half (3) to distribute glue during a full turn of said first disc half (3).

8. A gluing device according to claim 1, characterized in that auxiliary holding means (16) is mounted on the auxiliary support (11) to hold the second disc half (14) in engagement under the auxiliary support itself.

9. A gluing device according to claim 8, characterized in that the auxiliary holding means (16) comprises a given number of suction cups (16a) operating on an upper surface (14b) of the second disc half (14).

10. A gluing device according to claim 9, characterized in that the auxiliary holding means (16) further comprises at least one auxiliary rest portion (18) located on the auxiliary support (11) and acting in abutment relationship on the outer circumferential edge (14a) of the second disc half (14).

11. A gluing device according to claim 8, characterized in that it further comprises auxiliary holding means (17, 18, 19, 16a) operating on the second disc half (14) to bring it from a rest condition, in which said second disc half (14) is substantially planar, to a deformed condition in which the second disc half (14) has a central portion (14c) thereof disposed at a raised position relative to a perimetric edge (14a).

12. A gluing device according to claim 11, characterized in that said auxiliary holding means (16) comprises at least one auxiliary suction duct (17) opening into an auxiliary suction chamber (19) defined between said auxiliary support (11) and an upper surface (14b) of the second disc half (14), an outer circumferential edge (14a) of which is placed against an auxiliary rest portion (18) formed in the auxiliary support (11).

13. A gluing device according to claim 11, characterized in that the auxiliary holding means (16) further comprises an auxiliary inner rest element (16a) on which the central portion (14c) of the second disc half (14) leans when the latter is in the deformed condition.

14. A gluing device according to claim 1, characterized in that it further comprises a fixed outer jacket (15) surrounding the auxiliary support (11) in the standby position to define at least one projection (15a) the shape of which matches that of the second disc half (14), to promote placement of same to a centered position relative to the auxiliary support.

15. A gluing device according to claim 1, characterized in that the main support (2) has at least one perimetric projection (6) the shape of which matches that of the first disc half (3) to promote placement of same to a centered position on the main support itself.

16. A gluing device according to claim 1, characterized in that the auxiliary support (11) is located over the main support (2) and is movable in a vertical direction to bring the outer circumferential edge (14a) of the second disc half (14) in abutment, in the work position, against the outer circumferential edge (3b) of the first disc half (3).

17. A process for gluing disc halves together in the manufacture of data-storage optical discs comprising the following steps:
- arranging a first disc half (3) so that one of its surfaces intended for gluing (3a) is turned upwardly;
- resiliently deforming the first disc half (3) bringing an outer circumferential edge thereof to a raised position relative to a central portion (3c) of the disc half itself;
- spreading an adhesive at least on the outer circumferential edge (3b) of the first disc half (3), letting the adhesive run down by gravity along the surface intended for gluing;
- pairing the first disc half (3) with a second disc half (14) bringing one lower face (14d) of the second disc half (14) into contact with the surface intended for gluing (3a) of the first disc half (3).

18. A gluing process according to claim 17, in which, before spreading of an adhesive, the following steps are carried out:
- resiliently deforming the second disc half (14) bringing one central portion (14c) thereof to a raised position relative to an outer circumferential edge (14a) of the second disc half itself;
- bringing the outer circumferential edge (14a) of the second disc half (14) into contact with the outer circumferential edge (3b) of the first disc half (3); said pairing step being carried out by releasing from the deformed condition the first disc half (3) and second disc half (14), so that said disc halves (3, 14) take a planar configuration getting into mutual contact over the whole extension of said gluing surface (3a) and said lower surface (14d).

19. A gluing process according to claim 18, characterized in that glue spreading takes place after the outer circumferential edges (3b), (14a) of the disc halves (3), (14) have been brought into mutual contact relationship, said spreading being carried into effect by glue delivery from a nozzle (21) located at a central position relative to the disc halves (3), (14) and driven in rotation about the axis of the latter.

20. A gluing process according to claim 17, in which glue spreading comprises the following steps:
- positioning a delivery nozzle (21) to an operating position close to the outer circumferential edge (3b) of the first disc half (3);
- causing said first disc half (3) to carry out a full turn while glue is being delivered from nozzle (21) so as to spread the glue along said outer circumferential edge (3b);
- moving the delivery nozzle (21) from the operating position to a rest position in which it is laterally spaced apart from the first disc half (3).

21. A gluing process according to claim 20, characterized in that, before the step of pairing the two disc halves (3), (14) together, the first disc half (3) is released from the resiliently deformed condition to take a substantially planar configuration, said second disc half (14) being held in a substantially planar configuration during the pairing step.

## Patentansprüche

1. Gerät zum Kleben von Plattenhälften zur Herstellung von optischen Datenspeicherplatten, umfassend:
- einen Haupthalter (2), der bereitgestellt ist, eine erste Plattenhälfte (3) aufzunehmen, die eine für das Verkleben (3a) bestimmte, nach oben in die vom Haupthalter (2) abgewandte Richtung gerichtete Oberfläche aufweist;
- einen Hilfshalter (11), der gegenüber dem Haupthalter (2) zwischen einer Wartestellung, in der er vom Haupthalter (2) zur Aufnahme einer zweiten Plattenhälfte (14) entfernt ist, und einer Arbeitsstellung beweglich ist, in der er auf den Haupthalter (2) einwirkt, um die zweite Plattenhälfte (14) mit der ersten Plattenhälfte (3) zu koppeln;
- Kleberabgabemittel (20) zur Verteilung eines Haftmittels oder Klebers zwischen der ersten und der zweiten Plattenhälfte:
dadurch gekennzeichnet, daß es überdies umfaßt:
- elastische Verformungsmittel (4), die dem Haupthalter (2) zugeordnet sind und auf die erste Plattenhälfte (3) wirken, um sie in einem verformten Zustand anzuordnen, bei dem ihr Außenumfangsrand (3b) gegenüber ihrem mittigen Abschnitt (3c) angehoben ist, wobei die Kleberabgabemittel (20) einen Kleber mindestens in der Nähe des Außenumfangrandes (3b) der ersten Halbplatte (3) im deren verformten Zustand verteilen, wobei der Kleber durch Schwerkraft längs der für die Verklebung (3a) bestimmte Oberfläche abwärts gleiten gelassen wird.

2. Gerät zum Kleben nach Anspruch 1, dadurch gekennzeichnet, daß die elastischen Verformungsmittel (4) einen Auflageabschnitt (5), der auf einer Seitenwand (6) des Hauptlagers (2) liegt und im Bereich des Außenumfangsrandes (3b) der ersten Plattenhälfte (3) wirkt, und Greifmittel (5, 7, 8, 9) umfassen, die auf die erste Plattenhälfte (3) wirken, um sie in den verformten Zustand ausgehend von einer Ruhestellung, in der sie im wesentlichen eben ist, zu bringen.

3. Gerät zum Kleben nach Anspruch 2, dadurch gekennzeichnet, daß die Greifmittel (5, 7, 8, 9) mindestens eine Saugleitung (7) umfassen, die in eine Unterdruckkammer (8) einmündet, die zwischen dem Haupthalter (2) und einer unteren Fläche (3d) der ersten Plattenhälfte (3) festgelegt ist, deren Umfangsrand (3b) auf dem Auflageabschnitt (5) angeordnet ist.

4. Gerät zum Kleben nach Anspruch 2, dadurch gekennzeichnet, daß die Greifmittel (5, 7, 8, 9) eine vorgegebene Anzahl von Saugnäpfen (9) umfassen, die im Bereich einer unteren Fläche (3d) der ersten Plattenhälfte (3) wirken, um sie im verformten Zustand zu halten.

5. Gerät zum Kleben nach Anspruch 2, dadurch gekennzeichnet, daß die Greifmittel (5, 7, 8, 9) überdies mindestens ein inneres Auflageelement (9) umfassen, auf das sich der mittige Abschnitt (3c) der ersten Plattenhälfte (3) legt, wenn sich diese letztere im verformten Zustand befindet.

6. Gerät zum Kleben nach Anspruch 1, dadurch gekennzeichnet, daß die Kleberabgabemittel (20) umfassen:
- eine Abgabedüse (21), die im Bereich des mittigen Abschnittes (3c) der ersten Plattenhälfte (3) zur Abgabe des Haftmittels oder des Klebers an den Außenrand (3b) der ersten Plattenhälfte (3) liegt;
- Verstellmittel (21a) zur Drehbetätigung der Abgabedüse (21) um die Achse der ersten Plattenhälfte (3) zur Verteilung des Klebers auf dem Außenumfangsrand (3b) der ersten Plattenhälfte (3).

7. Gerät zum Kleben nach Anspruch 1, dadurch gekennzeichnet, daß die Kleberabgabemittel (20) umfassen:
- Verstellmittel (21a), die auf den Haupthalter (2) zur Drehbetätigung der ersten Plattenhälfte (3) um die eigene Achse wirken;
- eine Abgabedüse (21), die zwischen einer vom Haupthalter (2) entfernten Ruhestellung und einer Arbeitsstellung beweglich ist, in der sie im Bereich des Außenumfangrandes (3b) der ersten Plattenhälfte (3) zur Verteilung des Klebers während einer ganzen Umdrehung der ersten Plattenhälfte (3) wirkt.

8. Gerät zum Kleben nach Anspruch 1, dadurch gekennzeichnet, daß auf dem Hilfshalter (11) Hilfsgreifmittel (16) angebracht sind, um die zweite Plattenhälfte (14) unter dem Hilfshalter selbst in Eingriff zu halten.

9. Gerät zum Kleben nach Anspruch 8, dadurch gekennzeichnet, daß die Hilfsgreifmittel (16) eine vorgegebene Anzahl von Saugnäpfen (16a) umfassen, die im Bereich einer oberen Fläche (14b) der zweiten Plattenhälfte (14) wirken.

10. Gerät zum Kleben nach Anspruch 9, dadurch gekennzeichnet, daß die Hilfsgreifmittel (16) überdies mindestens einen Hilfsauflageabschnitt (18) umfassen, der auf dem Hilfshalter (11) liegt und in Auflage auf einem Außenumfangsrand (14a) der zweiten Plattenhälfte (14) wirkt.

11. Gerät zum Kleben nach Anspruch 8, dadurch gekennzeichnet, daß es überdies Hilfsgreifmittel (17, 18, 19, 16a) umfaßt, die auf die zweite Plattenhälfte (14) wirken, um sie von einer Ruhestellung, in der die zweite Plattenhälfte (14) im wesentlichen eben ist, in einen verformten Zustand zu bringen, in der die zweite Plattenhälfte (14) einen mittigen Abschnitt (14c) aufweist, der in einer angehobenen Stellung gegenüber einem Umfangsrand (14a) angeordnet ist.

12. Gerät zum Kleben nach Anspruch 11, dadurch gekennzeichnet, daß die Hilfsgreifmittel (16) mindestens eine Hilfssaugleitung (17) umfassen, die in eine Hilfssaugkammer (19) mündet, die zwischen dem Hilfshalter (11) und einer oberen Fläche (14b) der zweiten Plattenhälfte (14) festgelegt ist, deren ein Außenumfangsrand (14a) gegen einen Hilfsauflageabschnitt (18) gelegen ist, der am Hilfshalter (11) ausgenommen ist.

13. Gerät zum Kleben nach Anspruch 11, dadurch gekennzeichnet, daß die Hilfsgreifmittel (16) überdies ein inneres Hilfsauflageelement (16a) umfassen, auf den sich ein mittiger Abschnitt (14c) der zweiten Plattenhälfte (14) legt, wenn sich diese letztere im verformten Zustand befindet.

14. Gerät zum Kleben nach Anspruch 1, dadurch gekennzeichnet, daß es überdies einen festliegenden Außenmantel (15) umfaßt, der den Hilfshalter (11) in der Wartestellung umschreibt, um mindestens einen zur zweiten Plattenhälfte (14) gegenprofilierten Vorsprung (15a) festzulegen, um die Unterbringung in einer gegenüber dem Hilfshalter mittigen Stellung zu fördern.

15. Gerät zum Kleben nach Anspruch 1, dadurch gekennzeichnet, daß der Haupthalter (2) mindestens einen zur ersten Plattenhälfte (3) gegenprofilierten Umfangsvorsprung (6) aufweist, um deren Unterbringung in einer mittigen Stellung auf dem Haupthalter selbst zu fördern.

16. Gerät zum Kleben nach Anspruch 1, dadurch gekennzeichnet, daß der Hilfshalter (11) oberhalb des Haupthalters (2) angeordnet und in senkrechter Richtung verstellbar ist, um in der Arbeitsstellung den Außenumfangsrand (14a) der zweiten Plattenhälfte (14) mit dem Außenumfangsrand (3b) der ersten Plattenhälfte in Anschlag zu bringen.

17. Verfahren zum Kleben von Plattenhälften zur Herstellung von optischen Datenspeicherplatten, umfassend die folgenden Arbeitsschritte:
- Bereitstellung einer ersten Plattenhälfte (3) mit einer zu verklebenden Oberfläche (3a) nach oben gerichtet;
- elastische Verformung der ersten Plattenhälfte (3), wobei deren ein Außenumfangsrand (3b) in eine Stellung gebracht wird, die gegenüber einem mittigen Abschnitt (3c) der Plattenhälfte selbst angehoben ist;
- Verteilung eines Klebers auf mindestens einem Außenumfangsrand (3b) der ersten Plattenhälfte (3), wobei der Kleber durch Schwerkraft längs der für das Verkleben bestimmte Fläche hinab gleiten gelassen wird:
- Verbindung der ersten Plattenhälfte (3) mit einer zweiten Plattenhälfte (14), wobei eine untere Fläche (14d) der zweiten Plattenhälfte (14) mit der für das Verkleben (3a) bestimmte Fläche der ersten Plattenhälfte (3) in Berührung gebracht wird.

18. Verfahren zum Kleben nach Anspruch 17, bei dem, vor der Verteilung eines Klebers, folgende Arbeitsschritte durchgeführt werden:
- elastische Verformung der zweiten Plattenhälfte (14), wobei deren ein mittiger Abschnitt in eine Stellung gebracht wird, die gegenüber dem Außenumfangsrand (14a) der zweiten Plattenhälfte selbst angehoben ist;
- Herstellung einer Berührung zwischen dem Außenumfangsrand (14a) der zweiten Plattenhälfte (14) und dem Außenumfangsrand (3b) der ersten Plattenhälfte (3);
wobei der Arbeitsschritt der Verbindung ausgeführt wird, indem die erste Plattenhälfte (3) und die zweite Plattenhälfte (14) vom verformten Zustand losgelassen werden, wodurch die Plattenhälften (3, 14) eine ebene Konfiguration einnehmen, indem sie längs der gesamten Erstreckung der Klebefläche (3a) und der unteren Fläche (14d) in gegenseitige Berührung treten.

19. Verfahren zum Kleben nach Anspruch 18, dadurch gekennzeichnet, daß die Verteilung des Klebers erfolgt, nachdem die Außenumfangsränder (3b, 14a) der Plattenhälften (13, 14) gegenseitig in Berührung gebracht wurden, wobei die Verteilung über eine Kleberabgabe aus einer Düse (21) erfolgt, die in mittiger Stellung gegenüber den Plattenhälften (3, 14) angeordnet ist und um die Achse derselben drehangetrieben wird.

20. Verfahren zum Kleben nach Anspruch 17, bei dem die Verteilung des Klebers folgende Arbeitsschritte umfaßt:
- Positionierung einer Abgabedüse (21) in einer Arbeitsstellung im Bereich des Außenumfangrandes (3b) der ersten Plattenhälfte (3);
- Ausführung einer ganzen Umdrehung der ersten Plattenhälfte (3), wobei Kleber aus der Abgabedüse (21) abgegeben wird, um ihn längs des Außenumfangrandes (3b) zu verteilen;
- Verstellung der Abgabedüse (21) von der Arbeitsstellung in eine Ruhestellung, in der sie von der ersten Plattenhälfte (3) seitlich beabstandet ist.

21. Verfahren nach Anspruch 20, dadurch gekennzeichnet, daß, vor dem Arbeitsschritt der gegenseitigen Verbindung der beiden Plattenhälften (3, 14), die erste Plattenhälfte (3) vom elastisch verformten Zustand losgelassen wird, um eine ebene Konfiguration einzunehmen, wobei die zweite Plattenhälfte (14) während des Arbeitsschrittes der Verbindung gemäß einer im wesentlichen ebenen Konfiguration gehalten wird.

## Revendications

1. Appareil de collage de moitiés de disques pour la fabrication de disques optiques de stockage de données, comprenant:
- un support principal (2) agencé pour recevoir en appui une première moitié de disque (3) ayant une surface destinée au collage (3a) tournée vers le haut, en direction opposée au support principal (2);
- un support auxiliaire (11) mobile par rapport au support principal (2) entre une position d'attente dans laquelle il est éloigné du support principal (2) pour recevoir en engagement une seconde moitié de disque (14), et une position de travail dans laquelle il agit sur ledit support principal (2) pour coupler la seconde moitié de disque (14) avec la première moitié de disque (3),
- des moyens de distribution d'adhésif (20) pour distribuer un adhésif ou une colle entre les première et seconde moitiés de disque,
caractérisé en ce qu'il comporte en outre:
- des moyens de déformation élastique (4) associés au support principal (2) et agissant sur la première moitié de disque (3) pour la disposer en une condition déformée dans laquelle ladite première moitié de disque (3) a son bord périmétral extérieur (3b) relevé par rapport à sa portion centrale (3c), lesdits moyens de distribution d'adhésif (20) distribuant la colle au moins à proximité du bord circonférentiel extérieur (3b) de ladite première moitié de disque (3) dans sa condition déformée, laissant descendre la colle par gravité le long de la surface destinée au collage (3a).

2. Appareil de collage selon la revendication 1, caractérisé en ce que les moyens de déformation élastique (4) comportent une portion d'appui (5) située sur une paroi latérale (6) du support principal (2) et agissant en correspondance du bord circonférentiel extérieur (3b) de la première moitié de disque (3), et des moyens de prise (5, 7, 8, 9) opérant sur ladite première moitié de disque (3) pour amener cette dernière à ladite condition déformée à partir d'une condition de repos dans laquelle elle est essentiellement plate.

3. Appareil de collage selon la revendication 2, caractérisé en ce que lesdits moyens de prise (5, 7, 8, 9) comportent au moins un conduit d'aspiration (7) débouchant dans une chambre à vide (8) définie entre le support principal (2) et une surface inférieure (3d) de la première moitié de disque (3) dont le bord périmétral (3b) se trouve sur ladite portion d'appui (5).

4. Appareil de collage selon la revendication 2, caractérisé en ce que les moyens de prise (5, 7, 8, 9) comportent un nombre donné de ventouses (9) opérant en correspondance de la surface inférieure (3d) de la première moitié de disque (3) pour la retenir dans sa condition déformée.

5. Appareil de collage selon la revendication 2, caractérisé en ce que les moyens de prise (5, 7, 8, 9) comportent en outre au moins un élément d'appui intérieur (9) sur lequel prend appui la portion centrale (3c) de la première moitié de disque (3) quand cette dernière est dans sa condition déformée.

6. Appareil de collage selon la revendication 1, caractérisé en ce que les moyens de distribution (20) comportent:
- une tuyère distributrice (21) placée à proximité de la portion centrale (3c) de la première moitié de disque (3) pour distribuer l'adhésif ou la colle sur le bord extérieur (3b) de ladite première moitié de disque (3);
- des moyens de mise en mouvement (21a) pour entraîner en rotation ladite tuyère (21) autour de l'axe de ladite première moitié de disque (3) dans le but de répandre la colle sur le bord circonférentiel extérieur (3b) de ladite première moitié de disque (3).

7. Appareil de collage selon la revendication 1, caractérisé en ce que les moyens de distribution (20) comportent:
- des moyens de mise en mouvement (21a) agissant sur le support principal (2) pour entraîner en rotation la première moitié de disque (3) autour de son propre axe;
- une tuyère distributrice (21) mobile entre une position de repos écartée du support principal (2) et une position de fonctionnement dans laquelle elle opère en correspondance du bord circonférentiel extérieur (3b) de la première moitié de disque (3) pour répandre la colle pendant un tour complet de ladite première moitié de disque (3).

8. Appareil de collage selon la revendication 1, caractérisé en ce que des moyens de prise auxiliaires (16) sont montés sur le support auxiliaire (11) pour retenir la seconde moitié de disque (14) en engagement au-dessous du support auxiliaire lui-même.

9. Appareil de collage selon la revendication 8, caractérisé en ce que les moyens de prise auxiliaires (16) comportent un nombre donné de ventouses (16a) opérant sur une surface supérieure (14b) de la seconde moitié de disque (14).

10. Appareil de collage selon la revendication 9, caractérisé en ce que les moyens de prise auxiliaires (16) comportent en outre au moins une portion d'appui auxiliaire (18) située sur le support auxiliaire (11) et agissant en butée contre le bord circonférentiel extérieur (14a) de la seconde moitié de disque (14).

11. Appareil de collage selon la revendication 8, caractérisé en ce qu'il comporte en outre des moyens de prise auxiliaires (17, 18, 19, 16a) opérant sur la seconde moitié de disque (14) pour l'amener de la condition de repos, dans laquelle ladite seconde moitié de disque (14) est essentiellement plate, à une condition déformée dans laquelle la seconde moitié de disque (14) a une portion centrale (14c) disposée à une position relevée par rapport à un bord périmétral (14a).

12. Appareil de collage selon la revendication 11, caractérisé en ce que lesdits moyens de prise auxiliaires (16) comportent au moins un conduit d'aspiration auxiliaire (17) débouchant dans une chambre d'aspiration auxiliaire (19) définie entre ledit support auxiliaire (11) et une surface supérieure (14b) de la seconde moitié de disque (14) dont un bord circonférentiel extérieur (14a) est placé contre une portion d'appui auxiliaire (18) formée sur le support auxiliaire (11).

13. Appareil de collage selon la revendication 11, caractérisé en ce que les moyens de prise auxiliaires (16) comportent en outre un élément d'appui intérieur auxiliaire (16a) sur lequel prend appui la portion centrale (14c) de la seconde moitié de disque (14) quand cette dernière est dans la condition déformée.

14. Appareil de collage selon la revendication 1, caractérisé en ce qu'il comporte en outre une chemise extérieure fixe (15) entourant le support auxiliaire (11) à la position d'attente pour définir au moins une saillie (15a) dont la forme épouse celle de la seconde moitié de disque (14), pour favoriser la mise en place de cette dernière à une position centrée par rapport au support auxiliaire.

15. Appareil de collage selon la revendication 1, caractérisé en ce que le support principal (2) a au moins une saillie périmétrale (6) dont la forme épouse celle de la première moitié de disque (3) pour favoriser la mise en place de cette dernière à une position centrée sur le support principal lui-même.

16. Appareil de collage selon la revendication 1, caractérisé en ce que le support auxiliaire (11) est placé au-dessus du support principal (2) et est mobile en direction verticale pour amener le bord circonférentiel extérieur (14a) de la seconde moitié de disque (14) en butée, en position de travail, contre le bord circonférentiel extérieur (3b) de la première moitié de disque (3).

17. Procédé de collage de moitiés de disques pour la fabrication de disques optiques de stockage de données comprenant les étapes suivantes:
- arrangement d'une première moitié de disque (3) de sorte que l'une de ses surfaces destinée au collage (3a) soit tournée vers le haut;
- déformation élastique de la première moitié de disque (3), de manière à porter un bord circonférentiel extérieur de celle-ci à une position relevée par rapport à une portion centrale (3a) de la moitié de disque elle-même;
- distribution d'un adhésif au moins sur le bord circonférentiel extérieur (3b) de la première moitié de disque (3), laissant l'adhésif tomber par gravité le long de la surface destinée au collage;
- couplage de la première moitié de disque (3) avec une seconde moitié de disque (14) portant une face inférieure (14d) de la seconde moitié de disque (14) en contact avec la surface destinée au collage (3a) de la première moitié de disque (3).

18. Procédé de collage selon la revendication 17, dans lequel, avant qu'un adhésif soit distribué, sont effectuées les étapes suivantes:
- déformation élastique de la seconde moitié de disque (14) portant une portion centrale (14c) de celle-ci à une position relevée par rapport à un bord circonférentiel extérieur (14a) de la seconde moitié de disque elle-même;
- mise en contact du bord circonférentiel extérieur (14a) de la seconde moitié de disque (14) avec le bord circonférentiel extérieur (3b) de la première moitié de disque (3);
ladite étape de couplage étant effectuée en libérant de la condition déformée la première moitié de disque (3) et la seconde moitié de disque (14), de sorte que lesdites moitiés de disque (3, 14) prennent une configuration plate venant en contact réciproque sur toute l'étendue de ladite surface de collage (3a) et de ladite surface inférieure (14d).

19. Procédé de collage selon la revendication 18, caractérisé en ce que la distribution de la colle a lieu après que les bords circonférentiels extérieurs (3b), (14a) des moitiés de disque (3), (14) aient été amenés en contact réciproque, ladite distribution étant effectuée par une tuyère distributrice de colle (21) située à une position centrale par rapport aux moitiés de disque (3), (14) et entraînée en rotation autour de l'axe de ces dernières.

20. Procédé de collage selon la revendication 17, dans lequel la distribution de la colle comporte les étapes suivantes:
- mise en place d'une tuyère distributrice (21) à une position de fonctionnement à proximité du bord circonférentiel extérieur (3b) de la première moitié de disque (3);
- accomplissement d'un tour complet de la part de ladite première moitié de disque (3) pendant que la colle est distribuée par la tuyère (21) de manière à répandre la colle le long dudit bord circonférentiel extérieur (3b);
- déplacement de la tuyère distributrice (21) de la position de fonctionnement à une position de repos à laquelle elle est éloignée latéralement de ladite première moitié de disque (3).

21. Procédé de collage selon la revendication 20, caractérisé en ce qu'avant l'étape de couplage des deux moitiés de disque (3), (14), la première moitié de disque (3) est libérée de sa condition élastiquement déformée pour prendre une configuration sensiblement plate, ladite seconde moitié de disque (14) étant maintenue dans une configuration essentiellement plate pendant l'étape de couplage.
